# EUROPEAN PATENT SPECIFICATION

(11) **EP 3 335 990 B1**
(45) Date of publication and mention of the grant of the patent: **02.09.2020**
(21) Application number: 17207801.6
(22) Date of filing: 15.12.2017
(51) Int. Cl.: B64D 9/00, B64C 1/22, B65G 13/00

(54) **SIDE ROLLER ASSEMBLY FOR CARGO HANDLING SYSTEM**
SEITENROLLENANORDNUNG FÜR FRACHTHANDHABUNGSSYSTEM
ENSEMBLE DE ROULEAU LATÉRAL POUR SYSTÈME DE MANUTENTION DE CARGAISON

(30) Priority: 16.12.2016 IN 201611043061
(43) Date of publication of application: 20.06.2018
(73) Proprietor: Goodrich Corporation, Charlotte, NC 28217-4578 (US)
(72) Inventor: SHIVALINGA, Vinodkumar, 560062 Bangalore (IN); JAYAPRAKASH, Narain, 560097 Karnataka (IN); BOGAR, Vikramkumar, 560037 Bangalore (IN); LARSON, Wallace Harold, Jamestown, ND 58401 (US); OLSON, Mark L., Jamestown, ND 58401 (US)
(74) Representative: Dehns

(56) References cited:
- WO-A2-2008/091287
- US-A1- 2005 224 645
- US-A1- 2010 230 230
- US-A1- 2010 264 267
- US-A1- 2013 166 063

## Description

### BACKGROUND

Embodiments of the present disclosure relate to mounting cargo in a cargo compartment of an aircraft, and more particularly, to a roller assembly for a cargo mounting system used in the cargo compartment.

Cargo handling systems are typically used in a variety of applications to move or situate cargo in a particular area of a vehicle, such as a ship, truck, or aircraft. An aircraft cargo handling system typically includes a roller conveyor system mounted to a cross beam of the aircraft which enables pallets or containers to be moved easily in and out of the aircraft cargo compartment. A unit load device (ULD) is a pallet or container used to load luggage, freight, and mail on a wide-body aircraft. The cargo handling system includes locking mechanisms capable of locking adjacent ULDs in place longitudinally along the roller conveyor.

While current aircraft cargo handling systems or methods have generally proven to be satisfactory for their applications, each is associated with its share of limitations. Inclusion of a roller near each locking mechanism is intended to support the ULD and prevent deflection of the cargo pallet. However, in systems having multiple locking mechanisms located near one another, it is difficult to position a roller within the roller tray there between. As a result, the ULD adjacent these locking mechanisms is more susceptible to deflection and may result in the unintentional release of the locking mechanism from the cargo.

US 2005/224645 A1 discloses a cargo deck on which several mounting profiles are installed in the long direction of the aircraft.

WO 2008/091287 A2 discloses a system for loading cargo containers into a cargo hold.

US 2010/0264267 A1 discloses a fixing rail for attaching loading devices, particularly rollers, locking bars or power drive units to the loading deck of an aircraft.

US 2010/230230 A1 discloses roller conveyors of an aircraft cargo deck, including rollers for transporting freight packages, and a channel with side walls. The side walls have reinforcing sections with recesses in which the rollers are installed.

### BRIEF DESCRIPTION

According to an embodiment, a cargo handling system for restraining a unit load device as claimed in claim 1 is provided.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a side view of an example of a cargo handling system;
FIG. 2 is a cross-sectional view of the example of a cargo handling system of FIG. 1;
FIG. 3 is a perspective view of a cargo handling system including a side roller assembly according to an embodiment;
FIG. 4 is a side view of a cargo handling system including a side roller assembly according to an embodiment;
FIG. 5 is an end view of a portion of a cargo handling system including a side roller assembly according to an embodiment; and
FIGS. 6A-6C are various view of a side roller assembly according to an embodiment; and
FIGS. 7A-7C are various view of a side roller assembly according to another embodiment.

### DETAILED DESCRIPTION

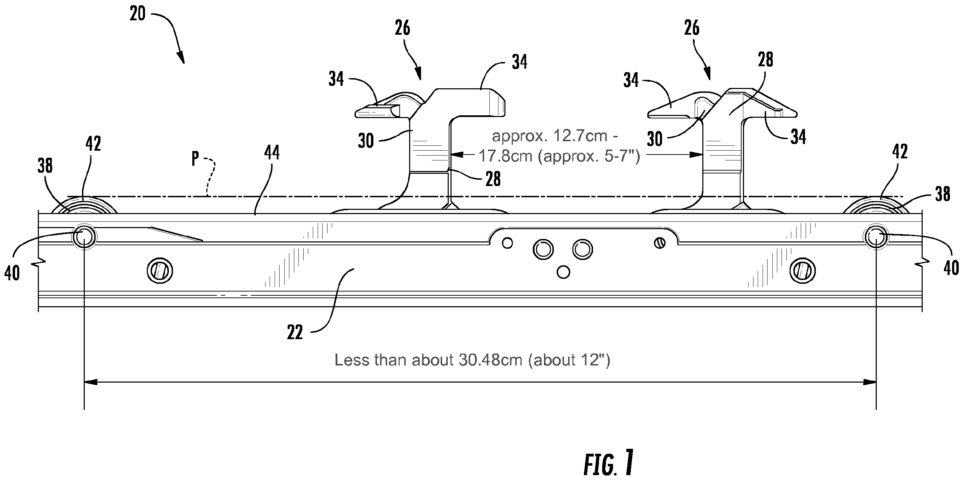

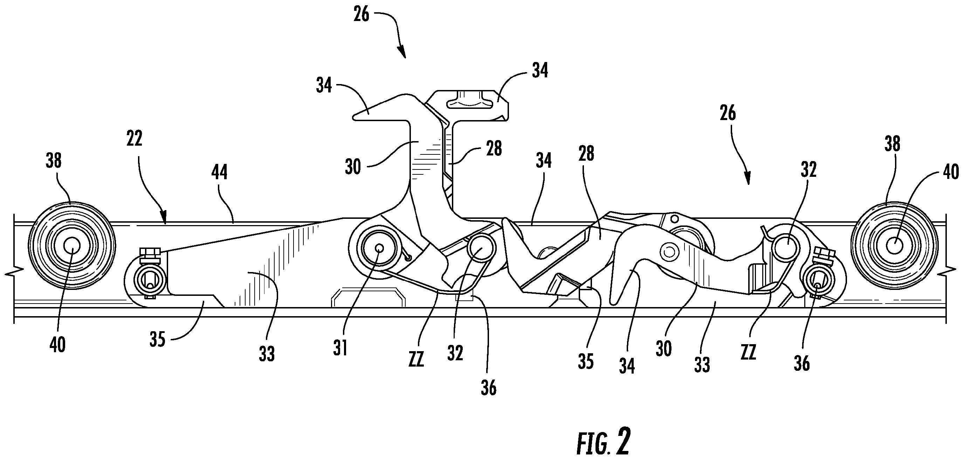

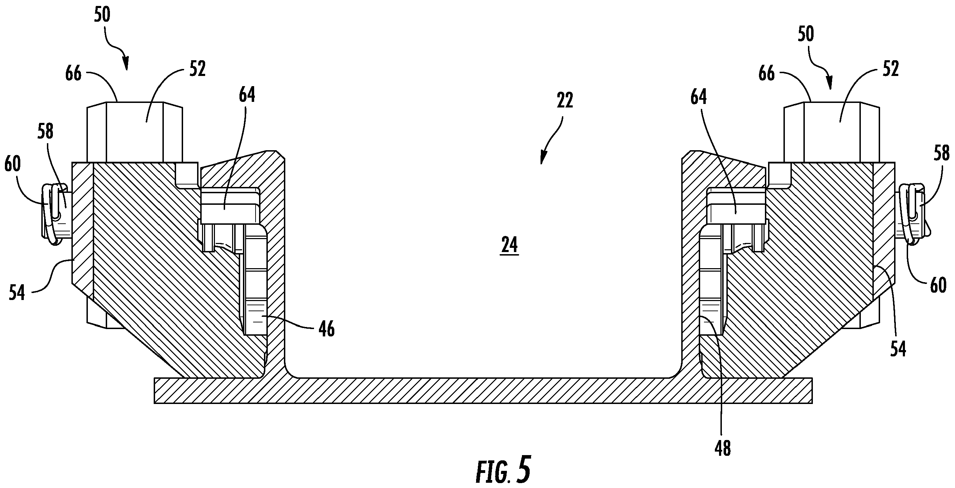

Referring now to FIGS. 1 and 2, an example of a cargo handling system 20 for use in an aircraft is illustrated. The cargo handling system 20 is intended to mount to the cross beam of an aircraft cargo compartment, which is typically supported by an aircraft substructure. The cargo handling system 20 includes a plurality of structural channels 22, also referred to as roller channels or trays, an example of which is illustrated in FIGS. 1 and 2. In the illustrated, non-limiting embodiment, the structural channel 22 is generally C-shaped (see FIG. 5) and is oriented such that the hollow interior 24 of the structural channel 22 faces vertically upward.

Each structural channel 22 includes one or more locking mechanisms 26 for locking one or more unit load devices (ULDs) in place relative to the system 20. As shown, one or more locking mechanisms 26 are generally positioned at a central portion of the structural channel 22; however, locking mechanisms 26 arranged at another location relative to the structural channel 22 are also contemplated herein. In the illustrated, non-limiting embodiment, a locking mechanism 26 includes both a first pawl 28 and a second pawl 30. The first pawl 28 is configured to rotate about a first pin 31 relative to the structural channel 22 between a first retracted position (FIG. 1) and a second engaged position (FIG. 2). Similarly, the second pawl 30 is configured to rotate about a second pin 32 relative to the structural channel 22 between a first retracted position and a second engaged position. In an embodiment, the first and the second pawl 28, 30 extend generally vertically in the retracted position and extend generally horizontally when in the engaged position. The first pin 31 and the second pin 32 are separated from one another by a horizontal distance such that the first pawl 28 and the second pawl 30 are independently rotatable. In an embodiment, however, the pawls 28, 30 are coupled by at least one spring ZZ to maintain contact between the pawls 28, 30 during rotation.

Each pawl 28, 30 may include a lip 34 configured to secure an adjacent cargo pallet (not shown) to the cargo handling system 20 when rotated to the engaged position. When the first and second pawl 28, 30 are both in the retracted position, the pawls 28, 30 are generally aligned with the lip 34 of the first pawl 28 extending in a first direction, and the lip 34 of the second pawl 30 extending in a second direction, such as opposite the first direction for example. In the engaged position, the pawls 28, 30 are configured to interlock with one another. For example, in an embodiment, a feature formed on the first pawl 28 engages a complementary feature on the second pawl 30 to limit unintended movement of the pawls 28, 30 beyond the engaged position. A stopper, such as a shaft or protrusion extending from a lock base plate 33 of the lock mechanism 26 may restrict rotation of the pawls 28 and 30 beyond the retracted position. As shown the first pawl 28 and the second pawl 30 are configured to contact stoppers 35 and 37, respectively, to prevent rotation beyond a desired position when rotated towards the retracted position. It should be understood that the locking mechanisms 26 illustrated and described herein are intended as an example only and that any suitable connector for securing cargo pallets to the structural channel is contemplated herein.

At least one roller 38 is mounted within the hollow interior 24 of the structural channel 22. As shown, each of a plurality of rollers 38 is mounted about a shaft or pin 40 extending horizontally between opposing sides of the channel 22. In an embodiment, the rotational axes of the plurality of rollers 38, defined by the supporting shafts 40, are generally parallel. Further the rotational axes of the rollers 38 may be parallel to a rotational axis of an adjacent locking mechanism 26. An upper surface 42 of the plurality of rollers 38 mounted to the structural channel 22 define a conveyor plane P (FIG. 1) along which one or more ULDs are moved. The rollers 38 are configured to support the ULDs as they move within the plane P. In an embodiment, the plane P is generally parallel to and vertically offset from an upper surface 44 of the structural channel 22. If the rollers 38 are substantially identical, the rollers 38 are generally mounted at a similar height relative to the structural channel 22. However, embodiments where one or more of the rollers 38 has a varied configuration, such as different diameter for example, are also contemplated herein, and the mounting position of the rollers 38 relative to structural channel 22 may vary accordingly.

Inclusion of a roller, such as roller 38 for example, near a locking mechanism 26 helps maintain the position of a ULD adjacent the locking mechanism 26, and reducing the risk of the locking mechanism 26 decoupling from the ULD. As a result, the horizontal distance between adjacent rollers 38 should be less than about 30.48 cm (about 12 inches). In embodiments where two locking mechanisms 26 are positioned relatively close to one another, such as less than 12 inches apart, and more specifically, between about 12.7 cm (about 5 inches) and about 17.8cm (about 7 inches) apart for example, a roller 38 cannot be located within the hollow channel 24 between the locking mechanisms 26 due to the operational interference that would occur therewith.

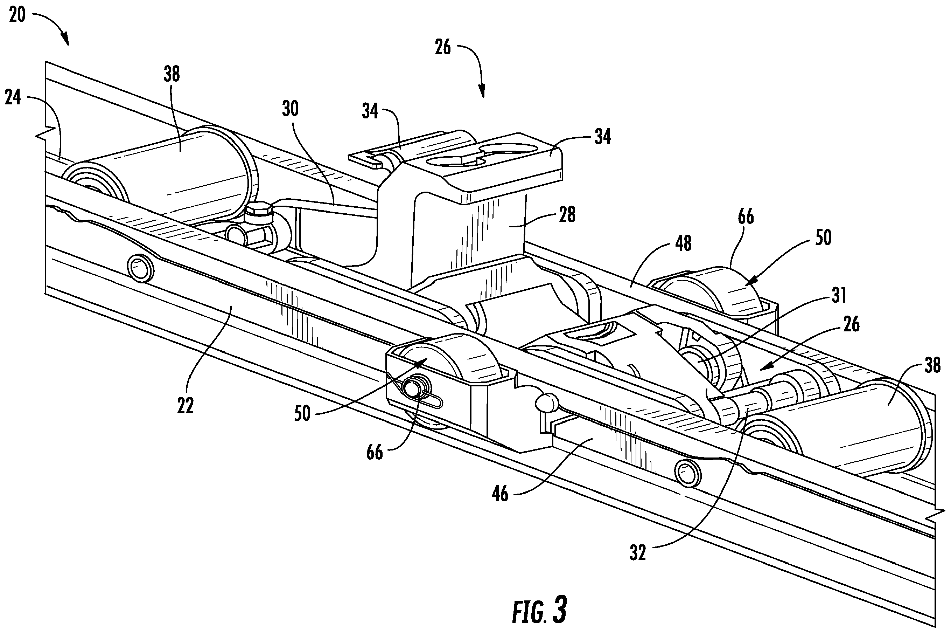

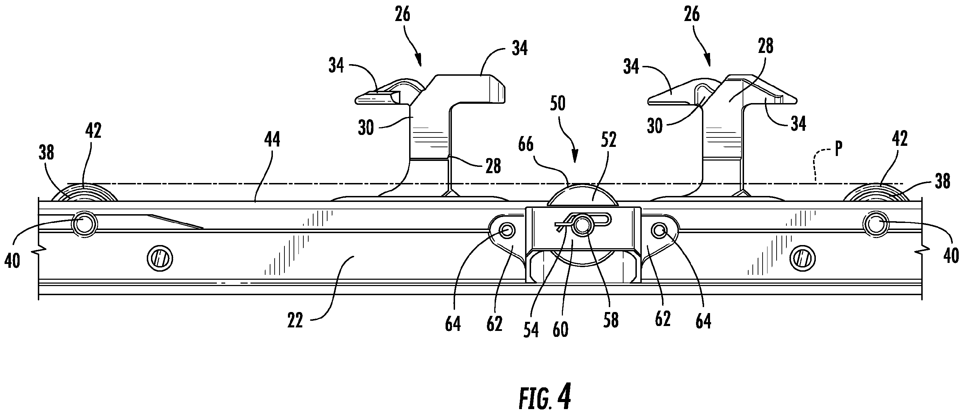

With reference now to FIGS. 3-5, one or more side roller assemblies 50 are mounted to an exterior surface of the structural channel 22 at a horizontal position disposed between the first and second locking mechanisms 26. In the illustrated, non-limiting embodiment, a first side roller assembly 50 is mounted adjacent a first side 46 of the structural channel 22 and a second side roller assembly 50 is mounted adjacent a second, opposite side 48 of the structural channel 22. In embodiments including multiple side roller assemblies 50, the side roller assemblies may be substantially identical, or alternatively may be different.

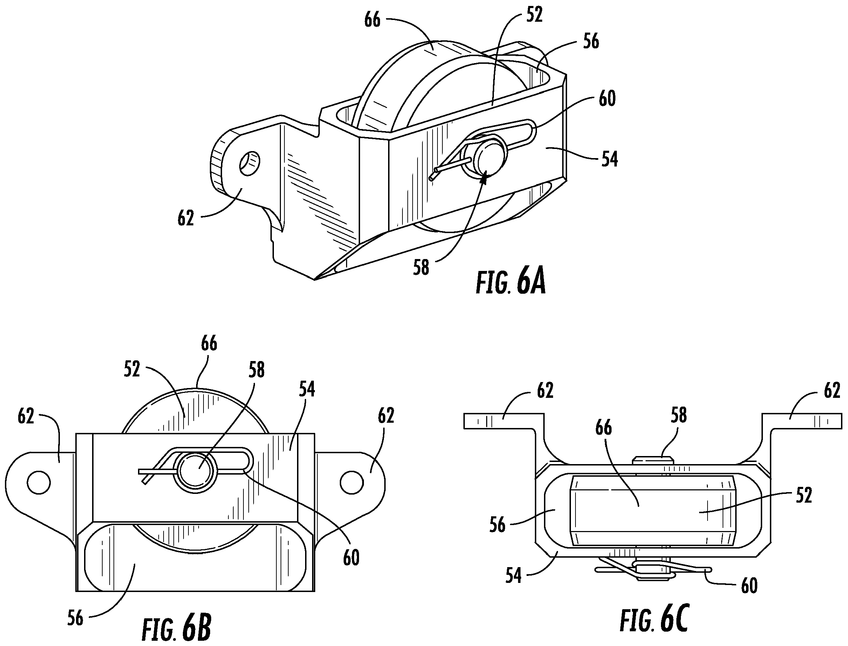

An example of a side roller assembly 50 is illustrated in more detail in FIGS. 6a-6c. The side roller assembly 50 includes a side roller 52 rotatably coupled to a housing or bracket 54. In an embodiment, the housing 54 defines a hollow interior 56 within which the side roller 52 is located. The side roller 52 may be supported by a shaft or pin 58 extending through one or more portions of the housing 54. For example, the pin 58 may extend through two portions of the housing 54 arranged on opposite sides of the hollow interior 56. A clip or other retention mechanism 60 may be coupled to an end of the pin 58, generally adjacent a surface of the housing 54 to restrict lateral movement of the pin 58 relative to the housing 54.

In the non-limiting embodiment of FIGS. 6A-6C, the housing 54 includes one or more flanges 62 for mounting to a surface of the structural channel 22, such as the first side 46 or second side 48 thereof for example. In an embodiment, the flanges 62 are generally offset from the portion of the housing 54 supporting the side roller 52. As a result, when the side roller assembly 50 is mounted to the structural channel 22, such as via a bolt or other fastener 64 extending through the flange 62, a clearance exists between the side of the structural channel 22 and the portion of the housing 54 supporting the side roller 52. The at least one flange 62 may include a generally planar surface having an orientation generally complementary to the structural channel 22. In an embodiment, the at least one flange 62 is configured such that when the side roller assembly 50 is mounted to the structural channel 22, the axis of rotation defined by the pin 58 is generally parallel to the axis of rotation of the rollers 38 mounted within the hollow interior 24 of the structural channel 22.

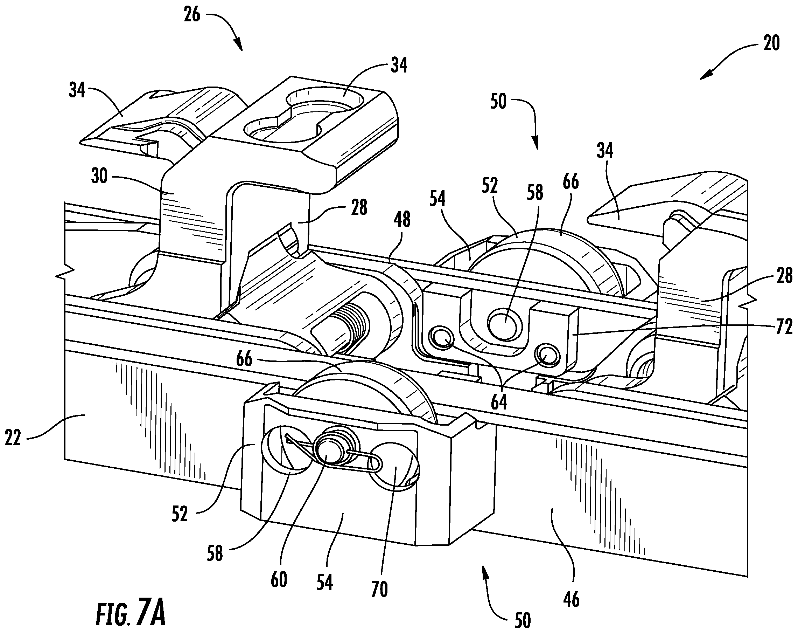

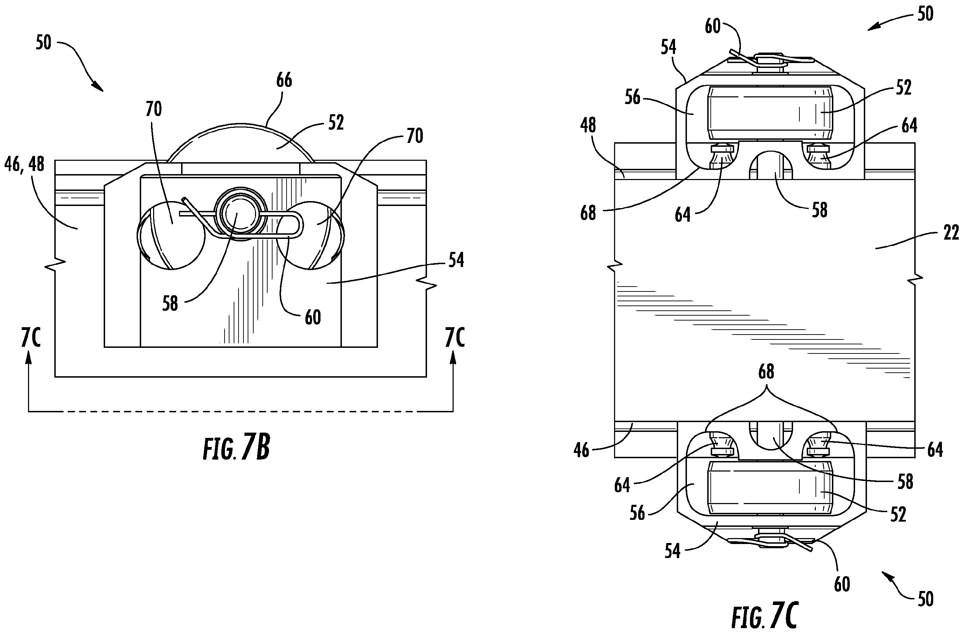

Another embodiment of the side roller assembly 50 is illustrated in in FIGS. 7A-7C. As previously described, the side roller assembly 50 includes a side roller 52 rotatably coupled to a housing or bracket 54. The side roller 52 is supported within a hollow interior of the bracket 54 by a shaft or pin 58 extending there through, and a retention mechanism 60 may be coupled to the pin 58 to restrict lateral movement of the pin 58 relative to the housing 54. In an embodiment, the hollow interior 56 of the portion of the housing 54 that receives the pin 58 is narrower than other portions of the housing 54 to restrict lateral movement of the side roller 52 along the axis defined by the pin 58.

At least one surface 68 of the housing 54, arranged within a plane, is configured to contact a surface 46, 48 of the structural channel 22 when mounted thereto. In the configuration of the housing 54 of FIGS. 7A-7C, the one or more fasteners 64 are positioned within the hollow interior 56 and extend through the housing 54, including the at least one surface 68, and a portion of the structural channel 22 to mount the housing 54 to the structural channel 22. The housing 54 may include at least one hole 70 formed in a sidewall thereof to allow a tool to be inserted into the hollow interior 56 to access the one or more fasteners 64.

In an embodiment, a spacer 72 is positioned within the hollow interior 24 of the structural channel 22, adjacent the side roller assembly. The spacer 72 may be a separate component, or may be integrally formed with the structural channel 22. The spacer is sized and shaped such that the one or more fasteners 64 are received within the spacer 72.
Regardless of the configuration of the side roller assembly 50, in embodiments where side roller assemblies 50 are mounted on opposing sides of the structural channel 22, the side roller assemblies 50 may, but need not be, horizontally aligned. In general, the side roller assembly 50 should be positioned about the structural channel 22 such that a distance between an adjacent pawl 28, 30 in the retraced position and a rotational axis of the side roller 52 is less than or equal to about 6.35 cm (about 2.5 inches). In addition, the housing 54 should be positioned relative to the structural channel 22 such that an upper surface 66 of the side roller 52 is aligned with the conveyor plane P defined by the other rollers 38.

Inclusion of at least one side roller assembly 50 at a position between adjacent locking mechanisms 26 provides added support for cargo located there between. As a result, the cargo is less likely to deflect below the conveyor plane P defined by the plurality of rollers and cause one of the locking mechanisms 26 to disengage from an adjacent ULD.

While the present disclosure has been described in detail in connection with only a limited number of embodiments, it should be readily understood that the present disclosure is not limited to such disclosed embodiments.

Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A cargo handling system (20) for restraining a unit load device comprising:
a structural channel (22) having a hollow interior (24);
a first locking mechanism (26) and a second locking mechanism (26) mounted within said hollow interior (24) of said structural channel (22), said first locking mechanism (26) and said second locking mechanism (26) being movable to engage the unit load device;
at least one roller (38) rotatably mounted within said hollow interior (24) of said structural channel (22); and
at least one side roller assembly (50) mounted to an exterior surface of said structural channel (22), said at least one side roller assembly (50) including a side roller (52), said side roller (52) being positioned between said first locking mechanism (26) and said second locking mechanism (26), said side roller (52) having an axis of rotation oriented parallel to an axis of rotation of said at least one roller (38), wherein an upper surface of said at least one roller (38) and an upper surface of said side roller (52) are disposed within a plane (P) for supporting said unit load device,
wherein the at least one roller (38) is not located between the first locking mechanism (26) and the second locking mechanism (26),
wherein said first locking mechanism (26) and said second locking mechanism (26) are positioned less than 30.48cm (12 inches) apart, and
no roller mounted within said hollow interior (24) of said structural channel (22) is located between the first locking mechanism (26) and the second locking mechanism (26).

2. The cargo handling system (20) according to claim 1, wherein said plane (P) defined by said at least one roller (38) and said side roller (52) is vertically offset from an upper surface of said structural channel (22).

3. The cargo handling system (20) according to claim 1 or 2, wherein said plane (P) defined by said at least one roller (38) and said side roller (52) is parallel to an upper surface of said structural channel (22).

4. The cargo handling system (20) according to any preceding claim, wherein said at least one side roller assembly (50) is separated from at least one of said first locking mechanism (26) and said second locking mechanism (26) by a distance less than or equal to about 6.35 cm (about 2.5 inches).

5. The cargo handling system (20) according to any preceding claim, wherein said at least one side roller assembly (50) includes a first side roller assembly (50) mounted to a first side (46) of said structural channel (22) and a second side roller assembly (50) mounted to a second (48), opposite side of said structural channel (22).

6. The cargo handling system (20) according to claim 5, wherein said first side roller assembly (50) and said second side roller assembly (50) are horizontally aligned.

7. The cargo handling system (20) according to any preceding claim, wherein said at least one side roller assembly (50) further comprises a housing (54) associated with said side roller (52), said housing (54) defines a hollow interior (56) within which said side roller (52) is located.

8. The cargo handling system (20) according to claim 7, wherein a clearance exists between said external surface of said structural channel (22) and said side roller (52).

9. The cargo handling system (20) according to claim 7 or 8, wherein said side roller assembly (50) further comprises:
a shaft (58) for rotatably mounting said side roller (52) to said housing (54); and
a retention mechanism (60) mounted to said shaft (58) adjacent said housing (54) to restrict lateral movement of said shaft (58) relative to said housing (54).

10. The cargo handling system (20) according to claim 7, 8 or 9, wherein said housing (54) further comprises a flange (62) for mounting said housing (54) to said exterior surface of said structural channel (22).

11. The cargo handling system (20) according to claim 10, wherein said flange (62) is mounted to said structural channel (22) with at least one fastener (64).

12. The cargo handling system (20) according to any of claims 7 to 11, wherein at least one fastener (64) positioned within said hollow interior mounts said housing (54) to said structural channel (22).

13. The cargo handling system (20) according to claim 12, wherein said housing (54) includes at least one hole (70) formed therein for accessing said at least one fastener (64) with a tool.

14. The cargo handling system (20) according to claim 12 or 13, wherein said structural channel (22) further comprises a spacer (72) arranged within an interior thereof, said spacer (72) positioned to receive said at least one fastener (64).

## Patentansprüche

1. Frachthandhabungssystem (20) zum Zurückhalten einer Einheitsladevorrichtung, das Folgendes umfasst:
einen strukturellen Kanal (22), der ein hohles Inneres (24) aufweist;
einen ersten Schließmechanismus (26) und einen zweiten Schließmechanismus (26), die innerhalb des hohlen Inneren (24) des strukturellen Kanals (22) montiert sind, wobei der erste Schließmechanismus (26) und der zweite Schließmechanismus (26) dazu beweglich sind, in die Einheitsladevorrichtung einzugreifen;
mindestens eine Rolle (38), die drehbar innerhalb des hohlen Inneren (24) des strukturellen Kanals (22) angeordnet ist; und
mindestens eine Seitenrollenanordnung (50), die an einer Außenfläche des strukturellen Kanals (22) montiert ist, wobei die mindestens eine Seitenrollenanordnung (50) eine Seitenrolle (52) beinhaltet, wobei die Seitenrolle (52) zwischen dem ersten Schließmechanismus (26) und dem zweiten Schließmechanismus (26) positioniert ist, wobei die Seitenrolle (52) eine Drehachse aufweist, die parallel zu einer Drehachse der mindestens einen Rolle (38) ausgerichtet ist, wobei eine obere Fläche der mindestens einen Rolle (38) und eine obere Fläche der Seitenrolle (52) innerhalb einer Ebene (P) zum Stützen der Einheitsladevorrichtung angeordnet sind,
wobei sich die mindestens eine Rolle (38) nicht zwischen dem ersten Schließmechanismus (26) und dem zweiten Schließmechanismus (26) befindet,
wobei der erste Schließmechanismus (26) und der zweite Schließmechanismus (26) weniger als 30,48 cm (12 Zoll) voneinander beabstandet sind und
sich keine Rolle, die innerhalb des hohlen Inneren (24) des strukturellen Kanals (22) montiert ist, zwischen dem ersten Schließmechanismus (26) und dem zweiten Schließmechanismus (26) befindet.

2. Frachthandhabungssystem (20) nach Anspruch 1, wobei die Ebene (P), die durch die mindestens eine Rolle (38) und die Seitenrolle (52) definiert ist, vertikal von einer oberen Fläche des strukturellen Kanals (22) versetzt ist.

3. Frachthandhabungssystem (20) nach Anspruch 1 oder 2, wobei die Ebene (P), die durch die mindestens eine Rolle (38) und die Seitenrolle (52) definiert ist, parallel zu einer oberen Fläche des strukturellen Kanals (22) ist.

4. Frachthandhabungssystem (20) nach einem der vorhergehenden Ansprüche, wobei die mindestens eine Seitenrollenanordnung (50) von mindestens einem des ersten Schließmechanismus (26) und des zweiten Schließmechanismus (26) um eine Entfernung von weniger als oder gleich etwa 6,35 cm (etwa 2,5 Zoll) getrennt ist.

5. Frachthandhabungssystem (20) nach einem der vorhergehenden Ansprüche, wobei die mindestens eine Seitenrollenanordnung (50) eine erste Seitenrollenanordnung (50), die an einer ersten Seite (46) des strukturellen Kanals (22) montiert ist, und eine zweite Seitenrollenanordnung (50), die an einer zweiten (48), entgegengesetzten Seite des strukturellen Kanals (22) montiert ist, beinhaltet.

6. Frachthandhabungssystem (20) nach Anspruch 5, wobei die erste Seitenrollenanordnung (50) und die zweite Seitenrollenanordnung (50) horizontal ausgerichtet sind.

7. Frachthandhabungssystem (20) nach einem der vorhergehenden Ansprüche, wobei die mindestens eine Seitenrollenanordnung (50) ferner ein Gehäuse (54) umfasst, das mit der Seitenrolle (52) zusammenhängt, wobei das Gehäuse (54) ein hohles Inneres (56) definiert, innerhalb dessen sich die Seitenrolle (52) befindet.

8. Frachthandhabungssystem (20) nach Anspruch 7, wobei ein Freiraum zwischen der äußeren Fläche des strukturellen Kanals (22) und der Seitenrolle (52) besteht.

9. Frachthandhabungssystem (20) nach Anspruch 7 oder 8, wobei die Seitenrollenanordnung (50) Folgendes umfasst:
eine Welle (58) zum drehbaren Montieren der Seitenrolle (52) an das Gehäuse (54); und
einen Rückhaltemechanismus (60), der an der Welle (58) benachbart zu dem Gehäuse (54) montiert ist, um eine laterale Bewegung der Welle (58) relativ zu dem Gehäuse (54) einzuschränken.

10. Frachthandhabungssystem (20) nach Anspruch 7, 8 oder 9, wobei das Gehäuse (54) ferner einen Flansch (62) zum Montieren des Gehäuses (54) an die äußere Fläche des strukturellen Kanals (22) umfasst.

11. Frachthandhabungssystem (20) nach Anspruch 10, wobei der Flansch (62) mit mindestens einem Befestigungselement (64) an den strukturellen Kanal (22) montiert ist.

12. Frachthandhabungssystem (20) nach einem der Ansprüche 7 bis 11, wobei mindestens ein Befestigungselement (64), das innerhalb des hohlen Inneren positioniert ist, das Gehäuse (54) an den strukturellen Kanal (22) montiert.

13. Frachthandhabungssystem (20) nach Anspruch 12, wobei das Gehäuse (54) mindestens ein Loch (70) beinhaltet, das darin gebildet ist, um mit einem Werkzeug zu dem mindestens einen Befestigungselement (64) zu gelangen.

14. Frachthandhabungssystem (20) nach Anspruch 12 oder 13, wobei der strukturelle Kanal (22) ferner einen Abstandhalter (72) umfasst, der innerhalb eines Inneren davon angeordnet ist, wobei der Abstandhalter (72) dazu positioniert ist, das mindestens eine Befestigungselement (64) aufzunehmen.

## Revendications

1. Système de manutention de cargaison (20) pour retenir un dispositif de charge unitaire comprenant :
un canal structurel (22) ayant un intérieur creux (24) ;
un premier mécanisme de verrouillage (26) et un second mécanisme de verrouillage (26) montés à l'intérieur dudit intérieur creux (24) dudit canal structurel (22), ledit premier mécanisme de verrouillage (26) et ledit second mécanisme de verrouillage (26) étant mobiles pour venir en prise avec le dispositif de charge unitaire ;
au moins un rouleau (38) monté de manière rotative à l'intérieur dudit intérieur creux (24) dudit canal structurel (22) ; et
au moins un ensemble de rouleau latéral (50) monté sur une surface extérieure dudit canal structurel (22), ledit au moins un ensemble de rouleau latéral (50) comportant un rouleau latéral (52), ledit rouleau latéral (52) étant positionné entre ledit premier mécanisme de verrouillage (26) et ledit second mécanisme de verrouillage (26), ledit rouleau latéral (52) ayant un axe de rotation orienté parallèlement à un axe de rotation dudit au moins un rouleau (38), dans lequel une surface supérieure dudit au moins un rouleau (38) et une surface supérieure dudit rouleau latéral (52) sont disposées dans un plan (P) pour supporter ledit dispositif de charge unitaire,
dans lequel l'au moins un rouleau (38) n'est pas situé entre le premier mécanisme de verrouillage (26) et le second mécanisme de verrouillage (26),
dans lequel ledit premier mécanisme de verrouillage (26) et ledit second mécanisme de verrouillage (26) sont positionnés à moins de 30,48 cm (12 pouces), et
aucun rouleau monté à l'intérieur dudit intérieur creux (24) dudit canal structurel (22) n'est situé entre le premier mécanisme de verrouillage (26) et le second mécanisme de verrouillage (26) .

2. Système de manutention de cargaison (20) selon la revendication 1, dans lequel ledit plan (P) défini par ledit au moins un rouleau (38) et ledit rouleau latéral (52) est décalé verticalement par rapport à une surface supérieure dudit canal structurel (22).

3. Système de manutention de cargaison (20) selon la revendication 1 ou 2, dans lequel ledit plan (P) défini par ledit au moins un rouleau (38) et ledit rouleau latéral (52) est parallèle à une surface supérieure dudit canal structurel (22).

4. Système de manutention de cargaison (20) selon une quelconque revendication précédente, dans lequel ledit au moins un ensemble de rouleau latéral (50) est séparé d'au moins l'un dudit premier mécanisme de verrouillage (26) et dudit second mécanisme de verrouillage (26) d'une distance inférieure ou égale à environ 6,35 cm (environ 2,5 pouces).

5. Système de manutention de cargaison (20) selon une quelconque revendication précédente, dans lequel ledit au moins un ensemble de rouleau latéral (50) comporte un premier ensemble de rouleau latéral (50) monté sur un premier côté (46) dudit canal structurel (22) et un second ensemble de rouleau latéral (50) monté sur un second (48) côté opposé dudit canal structurel (22).

6. Système de manutention de cargaison (20) selon la revendication 5, dans lequel ledit premier ensemble de rouleau latéral (50) et ledit second ensemble de rouleau latéral (50) sont alignés horizontalement.

7. Système de manutention de cargaison (20) selon une quelconque revendication précédente, dans lequel ledit au moins un ensemble de rouleau latéral (50) comprend en outre un boîtier (54) associé audit rouleau latéral (52), ledit boîtier (54) définit un intérieur creux (56) à l'intérieur duquel ledit rouleau latéral (52) est situé.

8. Système de manutention de cargaison (20) selon la revendication 7, dans lequel un espace existe entre ladite surface externe dudit canal structurel (22) et ledit rouleau latéral (52) .

9. Système de manutention de cargaison (20) selon la revendication 7 ou 8, dans lequel ledit ensemble de rouleau latéral (50) comprend en outre :
un arbre (58) pour monter de manière rotative ledit rouleau latéral (52) sur ledit boîtier (54) ; et
un mécanisme de retenue (60) monté sur ledit arbre (58) adjacent audit boîtier (54) pour restreindre le mouvement latéral dudit arbre (58) par rapport audit boîtier (54).

10. Système de manutention de cargaison (20) selon la revendication 7, 8 ou 9, dans lequel ledit boîtier (54) comprend en outre une bride (62) pour monter ledit boîtier (54) sur ladite surface extérieure dudit canal structurel (22).

11. Système de manutention de cargaison (20) selon la revendication 10, dans lequel ladite bride (62) est montée sur ledit canal structurel (22) avec au moins un élément de fixation (64) .

12. Système de manutention de cargaison (20) selon l'une quelconque des revendications 7 à 11, dans lequel au moins un élément de fixation (64) positionné à l'intérieur dudit intérieur creux monte ledit boîtier (54) sur ledit canal structurel (22).

13. Système de manutention de cargaison (20) selon la revendication 12, dans lequel ledit boîtier (54) comporte au moins un trou (70) formé à l'intérieur pour accéder audit au moins un élément de fixation (64) avec un outil.

14. Système de manutention de cargaison (20) selon la revendication 12 ou 13, dans lequel ledit canal structurel (22) comprend en outre une entretoise (72) disposée à l'intérieur de celui-ci, ladite entretoise (72) étant positionnée pour recevoir ledit au moins un élément de fixation (64).
